# EUROPÄISCHE PATENTSCHRIFT

(11) **EP 0 386 806 B1**
(45) Veröffentlichungstag und Bekanntmachung des Hinweises auf die Patenterteilung: **13.07.1994**
(21) Anmeldenummer: 90200100.7
(22) Anmeldetag: 16.01.1990
(51) Int. Cl.: F23J 3/04, F23J 15/00, B01D 50/00

(54) **Vorrichtung zur Abscheidung flüssiger Asche**
Device for the separation of liquid ashes
Dispositif pour la séparation de cendres liquides

(30) Priorität: 08.03.1989 DE 3907457
(43) Veröffentlichungstag der Anmeldung: 12.09.1990
(73) Patentinhaber: METALLGESELLSCHAFT AKTIENGESELLSCHAFT, 60323 Frankfurt am Main (DE)
(72) Erfinder: Weber, Ekkehard, Prof. Dr., D-4300 Essen 17 (DE)

(56) Entgegenhaltungen:
- EP-A- 0 117 003
- EP-A- 0 177 667
- EP-A- 0 233 630
- WO-A-88/03247
- WO-A-88/03248
- WO-A-88/04010
- DE-A- 3 720 963
- FR-A- 805 068
- US-A- 2 703 151
- US-A- 3 788 244
- US-A- 4 502 871

## Beschreibung

Die Erfindung bezieht sich auf eine Vorrichtung für die Abscheidung flüssiger Asche aus dem bei der Verbrennung kohlenstoffhaltiger Brennstoffe anfallenden Abgas, das eine Temperatur von 1200 bis 1800°C, einen Druck von 1 bis 100 bar, vorzugsweise 1 bis 30 bar, und vor der Reinigung einen Aschegehalt von 0,1 bis 60 g/Nm³ hat.

Es ist bekannt, daß kleine Kohleteilchen in einem sauerstoffhaltigen Gas suspendiert und in einer Brennkammer verbrannt werden können, wobei die anorganischen Bestandteile der Kohle als Asche anfallen. Abhängig von der Ausführung der Verbrennungseinrichtung (z.B. Schmelzkammerfeuerung), dem Brennstoff und auch von dem angebotenen Sauerstoffgehalt wird eine sehr hohe Verbrennungstemperatur erreicht, die dazu führt, daß das bei der Verbrennung gebildete Abgas die Brennkammer mit einer Temperatur von 1200 bis 1800°C verläßt und die bei der Verbrennung gebildete Asche in geschmolzener, flüssiger Form anfällt. In dem Dokument EP-A-0 177 667 ist eine Einrichtung zur Verbesserung der Strömungsumlenkung von Rauchgasen in einem Mehrzugkessel offenbart. Um Erosions- und Korrosionserscheinungen durch Anbackungen von im Rauchgas enthaltenen flüssigen Aschebestandteilen in den nachgeschaltenen Wärmetauschern zu vermindern, wird vorgeschlagen, Schaufelgitter im Umlenkbereich zwischen zwei Vertikalzügen anzuordnen. Das Schaufelgitter soll zum einen den Partikelaustrag unterstützen, zum anderen eine Homogenisierung des Strömungsprofils erzeugen. Dabei soll der Anstellwinkel der Rauchgasströmung auf die einzelnen schaufelgitterplatten 90° oder weniger betragen. Ein Abscheidegrad von Staubpartikeln, der die Nutzung des heißen Rauchgases in einer Gasturbine gestatten würde, wird allerdings weder angestrebt noch erreicht.

Es ist ferner bekannt, daß Abgase, die bei der Verbrennung unter Druck anfallen und eine hohe Temperatur aufweisen, vorteilhaft zur Erzeugung elektrischer Energie verwendet werden können, da ihr Energieinhalt von einer Gasturbine mit sehr gutem Wirkungsgrad in elektrische Energie umgewandelt wird. Der restliche Wärmeinhalt des die Gasturbine verlassenden Verbrennungsabgases kann in vorteilhafter Weise zur Erzeugung von Dampf in einem Dampfkessel genutzt werden. Aus energetischer und wirtschaftlicher Sicht ist also die Erzeugung von Verbrennungsabgasen anzustreben, die unter Druck stehen und eine möglichst hohe Temperatur aufweisen, wobei diese Temperatur zwischen 1200 und 1800°C liegt. Mit der Erzeugung eines derartigen Verbrennungsabgases ist der Nachteil verbunden, daß die bei der Verbrennung von Kohle entstehende Asche nicht in fester, sondern in flüssiger Form anfällt. Vor der Nutzung des heißen Verbrennungsabgases in einer Gasturbine muß die flüssige Asche weitgehend quantitativ aus dem Verbrennungsabgas entfernt werden, da die Gasturbine anderenfalls durch die sich ablagernden und verfestigenden Aschetröpfchen zerstört würde.

In der DE-A-3 720 963 wird ein Verfahren zur Abscheidung der Asche aus dem bei der Verbrennung von Kohle mit Luft anfallenden Abgas vorgeschlagen, bei dem das Verbrennungsabgas, das eine Temperatur von 1200 bis 1700°C hat und bei der Kohleverbrennung unter Druck anfällt, durch mindestens ein in der Brennkammer angeordnetes, keramisches, poröses, gasdurchlässiges Filterelement geführt wird, dessen Hauptbestandteile Al₂O₃, SiO₂, MgO und/oder ZrO₂ sind.

Insbesondere bei der Verbrennung von Kohle mit einem höheren Aschegehalt hat sich gezeigt, daß die Standzeit der Keramikfilter im Langzeitbetrieb verbesserungsbedürftig ist. Daher liegt der vorliegenden Erfindung die Aufgabe zugrunde, eine Vorrichtung zu schaffen, die bei Verwendung einfacher technischer Mittel über einen möglichst langen Zeitraum mit konstanter Abscheidungsleistung arbeitet.

Die der Erfindung zugrundeliegende Aufgabe wird dadurch gelöst, daß das aus der Brennkammer austretende aschehaltige Abgas, das eine Temperatur von 1200 bis 1800°C, einen Druck von 1 bis 100 bar, vorzugsweise 1 bis 30 bar, und vor der Reinigung einen Aschegehalt von 0,1 bis 60 g/Nm³ hat, in eine Vorrichtung zur Abscheidung flüssiger Asche geleitet wird, bestehend aus einem Zyklon mit Tauchrohr, dem ein Gehäuse nachgeschaltet ist, in dem mindestens eine Prallfläche angeordnet ist, die mit der Strömungsrichtung des Abgases einen Winkel von 90° bildet, und bei der das Gehäuse eine Einrichtung zur Entnahme der flüssigen Asche aufweist. In überraschender Weise hat sich gezeigt, daß bei hohen Temperaturen der größte Teil der flüssigen Asche im Zyklon abgeschieden wird und, abhängig von der Ausführungsweise der Prallabscheidung, mindestens 70 % der noch im Abgas suspendierten flüssigen Asche bei hohen Temperaturen abgetrennt werden können. Bei der an sich bekannten Prallabscheidung werden Staubteilchen oder Tröpfchen aus einem Gasstrom abgeschieden, wenn der Gasstrom umgelenkt wird, wobei die Partikel in Folge ihrer Massenträgheit ihre ursprüngliche Richtung beibehalten, auf das Hindernis aufprallen und sich dort niederschlagen (Ullmanns Enzyklopädie der Technischen Chemie, 3. Auflage, Band II/2, 1968, S. 411). Der Fachmann konnte nicht erwarten, daß die Prallabscheidung, die sich zur Gasreinigung bei vergleichsweise tiefen Temperaturen bewährt hat, auch die Abscheidung flüssiger Asche bei Temperaturen zwischen 1200 und 1800°C bis zu dem angegebenen Restgehalt ermöglicht. Bedingt durch die hohe Abscheidungsleistung des Zyklons werden dabei die nachgeschalteten Prallflächen hinsichtlich der Aschebeaufschlagung entlastet, wodurch die Lebensdauer der Prallflächenmaterialien erhöht wird.

Als vorteilhaft hat sich nach der Erfindung auch eine Vorrichtung bewährt, die aus einem mit einem Tauchrohr versehenen Zyklon besteht und bei der im Tauchrohr mindestens eine Prallfläche angeordnet ist, die mit der Strömungsrichtung des Abgases im Tauchrohr einen Winkel von etwa 90° bildet. Die Prallfläche kann beispielsweise im senkrechten Teil des Tauchrohres angeordnet werden. Diese Vorrichtung ermöglicht durch einfache technische Mittel eine nahezu quantitative Abscheidung der flüssigen Asche aus dem Abgas.

Eine weitere vorteilhafte Ausgestaltung der Vorrichtung ist dadurch gekennzeichnet, daß dem Gehäuse mindestens ein keramisches Filterelement nachgeschaltet ist. Die keramischen Filterelemente sind porös, gasdurchlässig und enthalten als Hauptbestandteile Al₂O₃, SiO₂, MgO und/oder ZrO₂. Die Filterelemente haben 10 bis 1000 Poren/cm², ihre offene Porosität liegt zwischen 30 und 90 % und ihr mittlerer Porendurchmesser beträgt 10 bis 2000 »m. Der Einsatz eines Filtrationsabscheiders hängt ab von Ausführung und Effektivität der vorgeschalteten Abscheider und ist dann empfehlenswert, wenn ein extrem niedriger Aschegehalt im Reingas von ca. 1 mg/Nm³ verlangt wird.

Als besonders vorteilhaft hat sich eine entsprechend der Erfindung ausgebildete Vorrichtung erwiesen, bei der das keramische Filterelement als Schüttbett ausgebildet ist, das aus keramischen Formkörpern besteht. Die keramischen Formkörper können beispielsweise kugelförmig sein und enthalten als Hauptbestandteile Al₂O₃, SiO₂, MgO und/oder ZrO₂. Das Schüttbett wird vom Abgas beispielsweise senkrecht von oben nach unten oder von unten nach oben durchströmt. Hierdurch wird erreicht, daß die flüssigen Aschepartikel gröbere Tropfen oder Flüssigkeitslamellen bilden, die weitgehend dem Schwerkraftgesetz folgen und ziemlich unabhängig von der Gasströmung in einen Sammelbehälter gelangen.

Die der Erfindung zugrundeliegende Aufgabe wird ferner durch eine Vorrichtung gelöst, bei der das aus der Brennkammer austretende aschehaltige Abgas, das eine Temperatur von 1200 bis 1800°C, einen Druck von 1 bis 100 bar und vor der Reinigung einen Aschegehalt von < 5 g/Nm³ hat, wobei die Asche in vergleichsweise großen Tropfen im Abgas suspendiert ist, in die Vorrichtung geleitet wird, bestehend aus einem Gehäuse, wobei im Gehäuse mindestens eine Prallfläche angeordnet ist, die mit der Strömungsrichtung des Abgases einen Winkel von etwa 90° einschließt, wobei das Gehäuse eine Einrichtung zur Entnahme der flüssigen Asche aufweist und wobei dem Gehäuse mindestens ein keramisches Filterelement nachgeschaltet ist. Es hat sich gezeigt, daß durch etwa senkrecht zur Strömungsrichtung des Abgases angeordnete Prallflächen eine Abscheidung der vergleichsweise großen flüssigen Aschetröpfchen erreicht werden kann, die von den Prallflächen gut abfließen und aus dem Prallabscheider ausgetragen werden können. Das Abgas kann beispielsweise horizontal oder vertikal auf die Prallfläche geführt werden. Durch die einer Prallabscheidung nachgeschaltete Filtrationsabscheidung wird insgesamt eine hohe Abscheidungsleistung erreicht.

Bei den entsprechend der Erfindung gestalteten Vorrichtungen hat es sich als besonders vorteilhaft erwiesen, wenn die Prallflächen, die Innenwandungen des Gehäuses, das Tauchrohr und die Innenwandungen des Zyklons mit einem feuerfesten keramischen Material beschichtet sind, das sich gegenüber der Asche chemisch inert verhält. Derartig gestaltete Teile haben eine hohe Lebensdauer und gewährleisten, daß es nicht zum Anbacken der flüssigen Asche kommt.

Zum Anfahren der Prozeßapparate wird über eine Leitung anstelle von Kohle aschefreies Heizöl in die Brennkammer eingebracht. Die Heizölzufuhr wird abgeschaltet, sobald alle Apparate auf die Abgastemperatur aufgeheizt worden sind. Während des Anfahrbetriebs wird bei Verwendung eines Filtrationsabscheiders ein Wehr geschlossen, d.h., es wird auf den Boden des Filtrationsabscheiders heruntergefahren. Beim Abfahren der Prozeßapparate wird staubförmige Kohle durch Heizöl ersetzt, das über eine Leitung in die Brennkammer gelangt. Die Verbrennung des Heizöls wird so lange durchgeführt, bis aus allen Prozeßapparaten die flüssige Asche entnommen worden ist.

Der Gegenstand der Erfindung wird nachfolgend anhand der Zeichnung und anhand von Ausführungsbeispielen näher erläutert.

Es zeigen:
- Fig. 1: Prallabscheider mit senkrechter Anströmung von oben,
- Fig. 2: Zyklon mit Tauchrohr,
- Fig. 3: Zyklon mit Tauchrohr, in dem Prallflächen angeordnet sind,
- Fig. 4: Abscheider mit keramischem Filterelement,
- Fig. 5: Abscheider mit keramischem Schüttbett und Anströmung von oben,
- Fig. 6: Vorrichtung zur Abscheidung flüssiger Asche.

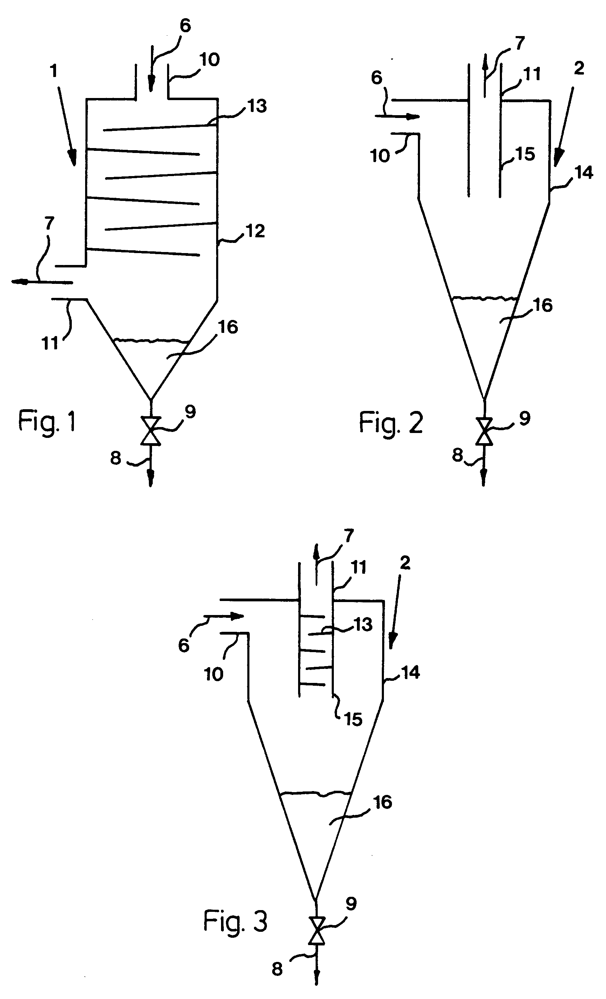

Fig. 1 zeigt einen Prallabscheider (1), der aus einem Gehäuse (12) besteht, in dem mehrere Prallflächen (13) etwa in einem Winkel von 90° zur Strömungsrichtung des aschehaltigen Abgases (6) angeordnet sind. Das aschehaltige Abgas (6) wird durch den Einlaß (10) senkrecht von oben nach unten in den Prallabscheider (1) geführt. Beim Auftreffen des aschehaltigen Abgases (6) auf die Prallflächen (13) werden die Aschetröpfchen abgeschieden und fließen auf den etwas schräg angeordneten Prallflächen (13) nach unten ab. Das weitgehend von den Aschetröpfchen befreite Abgas (7) verläßt den Prallabscheider (1) durch den Auslaß (11). Die flüssige Asche (16) sammelt sich im konischen Teil des Prallabscheiders (1) und wird diskontinuierlich über das Ventil (9) und die Leitung (8) abgezogen.

Durch einen Prallabscheider, der 6 Prallflächen aufwies, wurde ein Verbrennungsabgas von oben nach unten geführt, das einen Aschegehalt von 1,5 g/Nm³ hatte, dessen Strömungsgeschwindigkeit im freien Querschnitt 5 m/sec betrug und das eine Temperatur von 1500°C sowie einen Druck von 3 bar besaß. Bei einem Druckverlust von 8000 Pa hatte das Reingas einen Aschegehalt von ca. 50 mg/Nm³. Ähnlich gute Ergebnisse erzielt man auch bei Führung der Abgase von unten nach oben, vor allem aber dann, wenn das Abgas horizontal geführt wird.

Fig. 2 zeigt einen als Fliehkraftabscheider wirkenden Zyklon (2), der aus einem Gehäuse (14) besteht, in dem ein senkrechtes, eventuell auch bewegliches Tauchrohr (15) angeordnet ist. Das aschehaltige Abgas (6) tritt über den Einlaß (10) in den Zyklon (2) tangential ein und wird bei der Berührung mit den Wandflächen weitgehend entascht. Das entaschte Abgas (7) verläßt den Zyklon (2) über den Auslaß (11). Die flüssige Asche (16) wird im konischen Teil des Zyklons (2) gesammelt und diskontinuierlich über das Ventil (9) und die Leitung (8) abgezogen.

Aus einem Gas, das eine Temperatur von 1500°C sowie einen Druck von ca. 5 bar hatte, das einen Gehalt an flüssiger Asche von 30 bis 40 g/Nm³ aufwies und das eine Strömungsgeschwindigkeit von ca. 6 m/sec besaß, wurden bei einmaliger Passage eines Zyklons (2) ca. 90 % der flüssigen Asche abgeschieden, so daß das gereinigte Abgas (7) noch einen Aschegehalt von 3 g/Nm³ hatte. Es wurde anschließend einem Prallabscheider (1) zugeführt, mit dem eine Entaschung bis auf einen Aschegehalt von ca. 20 mg/Nm³ erreicht wurde.

Fig. 3 zeigt einen Zyklon (2) mit einem Tauchrohr (15), in dem 6 Prallflächen (13) angeordnet sind. Mit der in Fig. 3 dargestellten Vorrichtung wurde das Verbrennungsabgas, das eine Temperatur von 1500°C, einen Druck von ca. 5 bar und eine Strömungsgeschwindigkeit von ca. 6 m/sec aufwies, und das einen Aschegehalt von 30 bis 40 g/Nm³ hatte, bis zu einem Aschegehalt von ca. 30 mg/Nm³ gereinigt.

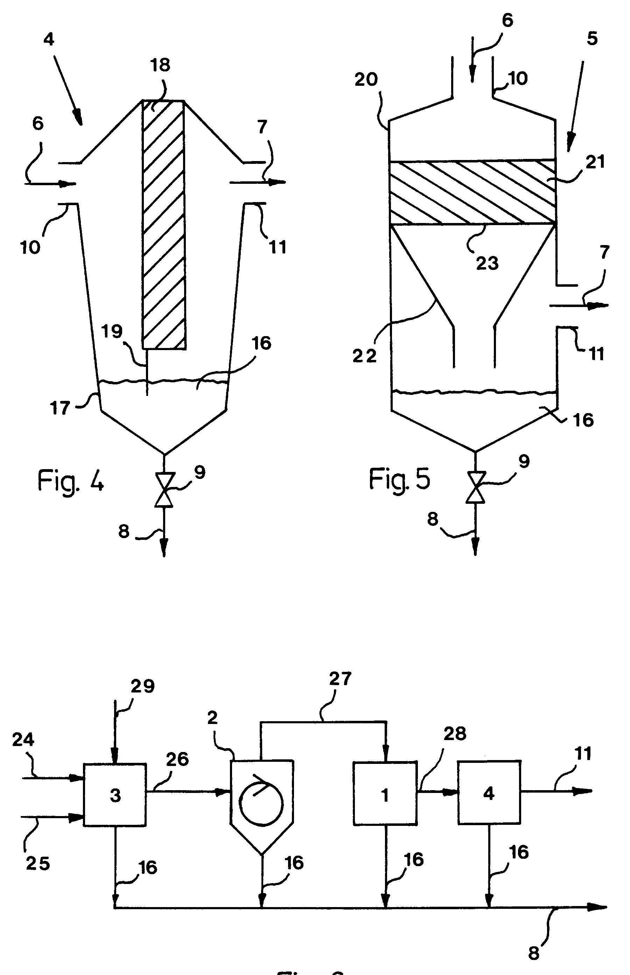

Fig. 4 zeigt einen Filtrationsabscheider (4), der aus einem Gehäuse (17) besteht, in dem ein keramisches Filterelement (18) angeordnet ist, das aus einem porösen ZrO₂-Schaum besteht. Das aschehaltige Abgas (6) tritt über den Einlaß (10) horizontal ein und trifft senkrecht auf das Filterelement (18). Ein Teil der flüssigen Asche wird beim Aufprall auf das Filterelement (18) direkt auf seiner Oberfläche abgeschieden und fließt senkrecht nach unten in den konischen Teil des Filtrationsabscheiders (4) ab. Ein anderer Teil der flüssigen Asche dringt in das Filterelement (18) ein und fließt senkrecht nach unten in den konischen Teil des Filtrationsabscheiders (4) ab. An der Rohgasseite des Filterelements (18) ist ein Wehr (19) angeordnet, das immer in die flüssige Asche (16) hineinragt und daher den Rohgasraum vom Reingasraum abtrennt. Es ist also gewährleistet, daß das gesamte Rohgas das Filterelement (18) passieren muß. Die flüssige Asche (16) wird aus dem Filtrationsabscheider (4) über das Ventil (9) und die Leitung (8) diskontinuierlich abgezogen. Das gereinigte Abgas (7) verläßt den Filtrationsabscheider (4) über den Auslaß (11).

Ein Abgas, das einen Aschegehalt von 7 g/Nm³, eine Temperatur von 1500°C, einen Druck von 3 bar und eine Strömungsgeschwindigkeit von 5 m/sec hatte, wurde bei einmaligem Durchgang durch ein Filterelement (18) bis auf einen Aschegehalt von 100 mg/Nm³ gereinigt, wobei der Druckverlust ca. 500 Pa betrug.

Fig. 5 zeigt einen Schüttbettabscheider (5) mit vertikaler Gasdurchströmung von oben nach unten, der aus einem Gehäuse (20) besteht, in dem ein als keramische Schüttschicht (21) ausgebildetes Filterelement angeordnet ist. Die keramische Schüttschicht (21) besteht aus kugelförmigen ZrO₂-Teilchen und befindet sich auf einer gelochten Platte (23). Das aschehaltige Gas (6) gelangt durch den Einlaß (10) in den Schüttbettabscheider (5), wo es senkrecht von oben nach unten durch die Schüttschicht (21) hindurchgeführt wird. Das gereinigte Abgas (7) verläßt den Schüttbettabscheider (5) durch den Auslaß (11). Die Schüttschicht (21) ist sowohl für das Gas als auch für die flüssige Asche durchlässig, wobei die flüssige Asche im Trichter (22) gesammelt wird und in den konischen Teil des Schüttbettabscheiders (5) abfließt. Die flüssige Asche (16) wird dem Schüttbettabscheider (5) über das Ventil (9) und die Leitung (8) diskontinuierlich entnommen.

Ein Verbrennungsabgas, das eine Temperatur von ca. 1500°C, einen Druck von ca. 6 bar, eine Strömungsgeschwindigkeit von ca. 4 m/sec und einen Aschegehalt von ca. 4 g/Nm³ hatte, wurde bei einmaligem Durchgang durch den Schüttbettabscheider (5) bis auf einen Restgehalt von weniger als 5 mg Asche pro Nm³ gereinigt.

Fig. 6 zeigt das Fließbild einer erfindungsgemäßen Vorrichtung, die in der dargestellten Weise immer dann zur Anwendung kommt, wenn aus heißen Verbrennungsabgasen größere Mengen von mitgerissenen flüssigen Aschepartikeln entfernt werden müssen. Über die Leitung (24) wird staubförmige Kohle, die in Luft suspendiert sein kann, und über die Leitung (25) wird Luft, die mit Sauerstoff angereichert sein kann, in die Brennkammer (3) geführt. Dort erfolgt die Verbrennung der Kohle bei einer Temperatur von ca. 1600°C und einem Druck von 15 bis 20 bar. Die Verbrennung kann unter-, über- oder stöchiometrisch durchgeführt werden. Bei der Verbrennung fällt die Asche in flüssiger Form an, und ein Teil der flüssigen Asche wird bereits der Brennkammer (3) entnommen. Der andere Teil der flüssigen Asche ist im entstandenen Rauchgas (Verbrennungsabgas) suspendiert und gelangt über die Leitung (26) in den Zyklon (2), wo bis zu 90 % der flüssigen Asche abgeschieden werden, so daß aus dem Zyklon (2) über die Leitung (27) ein Abgas abgeführt wird, das bereits einen niedrigen Aschegehalt von 2 bis 3 g/Nm³ hat. Dieses Abgas gelangt in den Prallabscheider (1), wo erneut ca. 90 % der flüssigen Asche abgeschieden werden, so daß aus dem Prallabscheider (1) über die Leitung (28) ein Abgas austritt, das einen Aschegehalt zumeist unter 50 mg hat. Dieses Abgas gelangt in den Filtrationsabscheider (4), wo ein Reingas erzeugt wird, dessen Aschegehalt < 5 mg/Nm³ beträgt. Das Reingas verläßt den Filtrationsabscheider (4) über die Leitung (11), während die flüssige Asche (16), die in allen Apparaten anfällt, über die Leitung (8) abgeführt wird.

Die in Fig. 6 dargestellte Vorrichtung wurde über einige hundert Betriebsstunden störungsfrei betrieben, wobei über die Leitung (11) ständig ein Gas mit einem Restaschegehalt von < 5 mg/Nm³ abgeführt werden konnte.

## Patentansprüche

1. Vorrichtung für die Abscheidung flüssiger Asche aus dem bei der Verbrennung kohlenstoffhaltiger Brennstoffe anfallenden Abgas, das eine Temperatur von 1200 bis 1800°C, einen Druck von 1 bis 100 bar, vorzugsweise 1 bis 30 bar, und vor der Reinigung einen Aschegehalt von 0,1 bis 60 g/Nm³ hat, bestehend aus einem Zyklon (2) mit Tauchrohr (15), dem ein Gehäuse (12) nachgeschaltet ist, in dem mindestens eine Prallfläche (13) angeordnet ist, die mit der Strömungsrichtung des Abgases (6) einen Winkel von 90° bildet, und bei der das Gehäuse (12) eine Einrichtung (9) zur Entnahme der flüssigen Asche (16) aufweist.

2. Vorrichtung nach Anspruch 1, bei der im Tauchrohr (15) mindestens eine Prallfläche (13) angeordnet ist, die mit der Strömungsrichtung des Abgases (6) im Tauchrohr (15) einen Winkel von etwa 90° bildet.

3. Vorrichtung nach Anspruch 1, bei der dem Gehäuse (12) mindestens ein keramisches Filterelement (18) nachgeschaltet ist.

4. Vorrichtung nach Anspruch 3, deren keramisches Filterelement (18) als Schüttbett (21) ausgebildet ist, das aus keramischen Festkörpern besteht.

5. Vorrichtung für die Abscheidung flüssiger Asche aus dem bei der Verbrennung kohlenstoffhaltiger Brennstoffe anfallenden Abgas, das eine Temperatur von 1200 bis 1800°C, einen Druck von 1 bis 100 bar und vor der Reinigung einen Aschegehalt von kleiner 5 g/Nm³ hat, wobei die Asche in vergleichsweise großen Tröpfchen im Abgas suspendiert ist, bestehend aus einem Gehäuse (12), wobei im Gehäuse (12) mindestens eine Prallfläche (13) angeordnet ist, die mit der Strömungsrichtung des Abgases (6) einen Winkel von etwa 90° einschließt, wobei das Gehäuse (12) eine Einrichtung (9) zur Entnahme der flüssigen Asche (16) aufweist und wobei dem Gehäuse (12) mindestens ein keramisches Filterelement (18) nachgeschaltet ist.

6. Vorrichtung nach den Ansprüchen 1 bis 5, bei der die Prallfläche (13), die Innenwände des Gehäuses (12), das Tauchrohr (15) und die Innenwandung des Zyklons (2) mit einem feuerfesten keramischen Material beschichtet sind, das sich gegenüber der abgeschiedenen Asche chemisch inert verhält.

7. Verfahren zum Anfahren der Vorrichtung nach den Ansprüchen 1 bis 6, bei dem über die Leitung (29) anstelle von Kohle aschefreies Heizöl in die Brennkammer (3) eingebracht und die Heizölzufuhr erst abgeschaltet wird, wenn alle Apparate auf die Abgastemperatur aufgeheizt sind, wobei während des Anfahrbetriebs das Wehr (19) des Filtrationsabscheiders (4) geschlossen wird.

8. Verfahren zum Abfahren der Vorrichtung nach den Ansprüchen 1 bis 6, bei dem die den Prozeßapparaten zugeführte staubförmige Kohle durch Heizöl ersetzt wird, das über die Leitung (29) in die Brennkammer (3) gelangt, wobei die Verbrennung des Heizöls so lange durchgeführt wird, bis aus allen Prozeßapparaten die flüssige Asche entnommen ist.

## Claims

1. An apparatus for separating off liquid ash from the exhaust gas produced upon the combustion of carbon-containing fuels, which has a temperature of 1200 to 1800°C, a pressure of 1 to 100 bar, preferably 1 to 30 bar, and before purification has an ash content of 0.1 to 60 g/Nm³, consisting of a cyclone (2) with dip pipe (15), which is succeeded by a housing (12) in which at least one baffle plate (13) is located which forms an angle of 90° with the direction of flow of the exhaust gas (6), and in which the housing (12) has a means (9) for removing the liquid ash (16).

2. An apparatus according to Claim 1, in which at least one baffle plate (13) is located in the dip pipe (15), which plate forms an angle of about 90° with the direction of flow of the exhaust gas (6) in the dip pipe (15).

3. An apparatus according to Claim 1, in which the housing (12) is succeeded by at least one ceramic filter element (18).

4. An apparatus according to Claim 3, the ceramic filter element (18) of which is designed as a particulate bed (21) which consists of ceramic solids.

5. An apparatus for separating off liquid ash from the exhaust gas produced upon the combustion of carbon-containing fuels, which has a temperature of 1200 to 1800°C, a pressure of 1 to 100 bar and before purification has an ash content of less than 5 g/Nm³, the ash being suspended in comparatively large droplets in the exhaust gas, consisting of a housing (12), with at least one baffle plate (13) being located in the housing (12) which encloses an angle of about 90° with the direction of flow of the exhaust gas (6), the housing (12) having a means (9) for removing the liquid ash (16) and the housing (12) being succeeded by at least one ceramic filter element (18).

6. An apparatus according to Claims 1 to 5, in which the baffle plate (13), the inner walls of the housing (12), the dip pipe (15) and the inner walls of the cyclone (2) are coated with a refractory ceramic material which is chemically inert with respect to the ash which is separated off.

7. A method for starting up the apparatus according to Claims 1 to 6, in which instead of carbon ash-free fuel oil is introduced into the chamber (3) via line (29), and the supply of fuel oil is not switched off until all the apparatus have been heated to the exhaust gas temperature, with the weir (19) of the filter separator (4) being closed during the start-up operation.

8. A method for shutting down the apparatus according to Claims 1 to 6, in which the dust-form carbon supplied to the process apparatus is replaced by fuel oil which passes via line (29) into the combustion chamber (3), the combustion of the fuel oil being carried out until the liquid ash has been removed from all the process apparatus.

## Revendications

1. Dispositif pour la séparation de cendres liquides d'un gaz d'échappement produit lors d'une combustion de combustibles contenant du carbone, qui a une température comprise 1200 et 1800°C, une pression entre 1 et 100 bar, de préférence entre 1 à 30 bar et une teneur en cendres, avant épuration, comprise entre 0,1 et 60 g/Nm³, le dispositif consistant en un cyclone (2) avec un tube plongeur (15), en arrière duquel est intercalé un carter (12) dans lequel est disposée au moins une chicane (13) qui forme un angle de 90° avec la direction d'écoulement du gaz d'échappement (6) et dans lequel le carter est pourvu d'un dispositif (9) pour le soutirage des cendres liquides (16).

2. Dispositif selon la revendication 1, dans lequel au moins une chicane (13) est disposée dans le tube plongeur (15) laquelle forme un angle d'environ 90° avec la direction d'écoulement du gaz d'échappement (6).

3. Dispositif selon la revendication 1, dans lequel au moins un élément filtrant (18) en céramique est intercalé en arrière du carter (12).

4. Dispositif selon la revendication 3, dans lequel l'élément filtrant (18) est formé par un lit de particules (21) consistant en des corps solides en céramique.

5. Dispositif pour la séparation de cendres liquides d'un gaz d'échappement produit lors d'une combustion de combustibles contenant du carbone, qui a une température comprise entre 1200 et 1800°C, une pression entre 1 et 100 bar et une teneur en cendres, avant épuration, de moins de 5 g/Nm³, dans lequel les cendres sont en suspension dans des gouttelettes à taille relativement élevée, le dispositif consistant en un carter (12), dans lequel est disposée au moins une chicane (13) qui forme un angle de 90° par rapport à la direction d,écoulement du gaz d'échappement (6), le carter (12) comportant un dispositif (9) pour le soutirage des cendres liquides (16) et au moins un élément filtrant (18) en céramique intercalé en arrière du carter (12).

6. Dispositif selon les revendications 1 à 5, dans lequel la chicane (13), les parois internes du carter (12), le tube plongeur (15) et les parois internes du cyclone (2) sont recouverts d'un matériau réfractaire en céramique qui est chimiquement inerte vis à vis des cendres séparées.

7. Procédé pour la mise en route du dispositif selon les revendications 1 à 6 dans lequel on alimente la chambre de combustion (3) au moyen du conduit (29) par du fioul sans cendres au lieu de charbon et dans lequel on ferme l'alimentation par le fioul uniquement quand tous les appareils sont chauffés a la température du gaz d'échappement, et dans lequel on ferme, pendant la mise en route, le barrage (19) du séparateur filtrant (4).

8. Procédé pour mettre à l'arrêt le dispositif selon les revendications 1 à 6 dans lequel on remplace le charbon pulvérulent alimentant les appareils du procédé par du fioul qui atteint la chambre de combustion (3) par le conduit (29), la combustion du fioul étant réalisée jusqu'à ce que tous les appareils du procédé aient été vidés des cendres liquides.
